**Europäisches Patentamt**

**European Patent Office**

**Office européen des brevets**

(19)

(11) Veröffentlichungsnummer : **0 355 256 B1**

(12) ## EUROPÄISCHE PATENTSCHRIFT

(45) Veröffentlichungstag der Patentschrift :
**08.07.92 Patentblatt 92/28**

(51) Int. Cl.$^5$ : **B23B 31/36**

(21) Anmeldenummer : **89106092.3**

(22) Anmeldetag : **07.04.89**

(54) **Kraftbetätigtes Backenspannfutter für exzentrisch zu spannende Werkstücke.**

(30) Priorität : **19.08.88 DE 3828162**

(43) Veröffentlichungstag der Anmeldung :
**28.02.90 Patentblatt 90/09**

(45) Bekanntmachung des Hinweises auf die
Patenterteilung :
**08.07.92 Patentblatt 92/28**

(84) Benannte Vertragsstaaten :
**DE ES FR GB IT SE**

(56) Entgegenhaltungen :
**EP-A- 0 185 883**
**DE-C- 422 198**
**JP-A-59 142 006**
**SOVIET INVENTIONS ILLUSTRATED,Derwent**
**Publ.Ltd Sections general/mechanical,Abstr.-**
**no.F0141 K/15 &SU-A-933286(GRIGOREV S**
**M)07.06.82**

(73) Patentinhaber : **Röhm, Günter Horst**
**Heinrich-Röhm-Strasse 50**
**W-7927 Sontheim (DE)**

(72) Erfinder : **Röhm, Günter Horst**
**Heinrich-Röhm-Strasse 50**
**W-7927 Sontheim (DE)**
Erfinder : **Kolmberger, Manfred**
**Keltenstr. 11**
**W-8880 Dillingen-Hausen (DE)**

(74) Vertreter : **Fay, Hermann, Dipl.-Phys. Dr. et al**
**Ensingerstrasse 21 Postfach 1767**
**W-7900 Ulm (Donau) (DE)**

## Beschreibung

Die Erfindung betrifft ein kraftbetätigtes Backenspannfutter für exzentrisch zu spannende Werkstücke, insbes. andere Kurbelwellen, wobei die Spannachse parallel und exzentrisch zur Drehachse des Spannfutters verläuft, mit einer koaxial zur Drehachse auf einer Drehmaschinenspindel befestigbaren Futterbasis, einem an der Futterbasis parallel zu der durch die Drehachse und die Spannachse gehenden Mittelebene verschiebbar gehaltenen und die Einstellung der Exzentrizität der Spannachse gegenüber der Drehachse ermöglichenden Spannkopf, in dem in zur Mittelebene spiegelsymmetrischer Anordnung zwei kreisbogenförmig um zur Spannachse parallele Krümmungsachsen gebogene und durch Schwenken um ihre Krümmungsachse gegen die Spannachse verstellbare Spannbacken geführt sind, zu deren Betätigung ein in der Futterbasis axial verstellbar angeordnetes Treibglied vorgesehen ist, und mit einem in der Mittelebene und in Bezug auf die Spannachse gegenüber den Spannköpfen der kreisbogenförmigen Spannbacken angeordneten Gegenlager für das Werkstück.

Bei aus der Praxis bekannten Spannfuttern dieser Art ist das Gegenlager ein am Spannkopf feststehendes Auflager für das Werkstück. Das hat zur Folge, daß vor der Bearbeitung bestehende Toleranzen des Werkstückes im Spanndurchmesser bei der Einspannung zwischen dem festen Auflager und den beiden kreisbogenförmigen Spannbacken zu entsprechenden Unterschieden im Exzenterhub zwischen der Spannachse und der Drehachse führen, so daß auch die Exzentrizität des im Spannfutter feitig bearbeiteten Werkstückes entsprechende Toleranzen zeigt.

Bei einem aus der EP-A-0 185 883 bekannten Spannfutter anderer Art sind alle Spannbacken zentrisch auf die Spannachse verstellbar, jedoch ist keine der Spannbacken kreisbogenförmig gebogen. Die Spannbacken verlaufen alle in radialer Richtung verschiebbar geführt. Im übrigen ist der Spannkopf als Schieber ausgebildet, der quer zur Verschiebungsrichtung schmaler als die Futterbasis ist. Die Spannbacken mit gegenüber zum Spannkopfkörper geneigter Verschiebungsrichtung müssen daher in ein inneres und äußeres Backenteil getrennt sein, wobei die inneren Backenteile im Schieber und die äußeren Backenteile in der Futterbasis geführt sind. Diese Bauform ist konstruktiv aufwendig und kann bei Spannfuttern mit kreisbogenförmigen Spannbacken nicht verwirklicht werden.

Der Erfindung liegt die Aufgabe zugrunde, ein Spannfutter der eingangs genannten Art so auszubilden, daß bei kleinen axialen Bauabmessungen des Spannfutters das Werkstück mit hoher Genauigkeit zentrisch eingespannt wird und daher Toleranzen des Werkstückes im Spanndurchmesser nicht zu entsprechenden Toleranzen in der Exzentrizität der Spannachse gegenüber der Drehachse führen können.

Diese Aufgabe wird bei einem Backenspannfutter der eingangs genannten Art dadurch gelöst, daß das Gegenlager als eine im Spannhub zentrisch mit den beiden kreisbogenförmigen Spannbacken angetriebene mittlere Spannbacke ausgebildet und dazu in der Mittelebene und in Bezug auf die Spannachse radial verstellbar im Spannkopf geführt ist, und daß zur gemeinsamen Verstellung aller drei Spannbacken ein an das Treibglied angeschlossener, im Spannkopf axial geführter Betätigungskolben mit einem Spannkeilkörper vorgesehen ist, der zwei seitliche Spannflächen, für die ihnen mit entsrpechenden Schrägflächen anliegenden Enden der kreisbogenförmigen Spannbacken und mittig dazwischen eine nutartige Aussparung aufweist, in der die mittlere Spannbacke verläuft und an deren Nutseitenwände Keilzähne vorgesehen sind, die in Treibnuten an den Seiten der mittleren Spannbacke greifen und die dieser Spannbacke zugeordneten Spannfläche tragen, welche die Spannbacke mit den entsprechend schrägen Seitenwänden der Treibnuten anliegt.

Durch den Spannkeilkörper wird nicht nur erreicht, daß alle drei Spannbacken zentrisch auf die Spannachse spannen, wobei die Spannwege der Spannbacken über die Neigung der Spannflächen genau aufeinander abgestimmt werden können, sondern die in ihm zur Aufnahme der mittleren Spannbacke mittig vorgesehene nutartige Aussparung ermöglicht auch,

daß die Spannbacken alle in axialer Richtung im wesentlichen übereinstimmende Dicke aufweisen können und senkrecht zur Axialrichtung in im wesentlichen derselben Ebene angeordnet sein können. Diese Anordnung aller Spannbacken einschließlich ihrer Spannflächen in im wesentlichen derselben Ebene ergibt einen reaktionsfreien Spannvorgang, so daß die Spannbacken beim Einspannen des Werkstückes nicht "aufschnäbeln" können. Weiter wird erreicht, daß die mittlere Spannbake mit ihrer Betätigungseinrichtung axial nicht größer als die kreisbogenförmigen Spannbacken baut, was insgesamt eine kurze axiale Futterbaulänge ermöglicht und die Voraussetzung dafür schafft, daß axial hinter dem Spannbacken Raum für weitere Ver- und Feststelleinrichtungen zur Verfügung steht, wie beispielsweise für die Richtbacken, die dem Unwuchtausgleich dienenden Gegenstücke usw. Insgesamt ermöglicht somit der Spannkeilkörper eine erhebliche axiale Platzersparnis bei gleichzeitig hoher Spanngenauigkeit.

Im einzelnen empfiehlt es sich, die Anordnung so zu treffen, daß der Betätigungskolben anschließend an den Spannhub aller Spannbacken einen Schnellhub nur für die beiden kreisbogenförmigen Spannbacken zum vollständigen Öffnen der Werkstückaufnahme ausführen kann, wobei der Spannkeilkörper nur auf dem Wege des Spannhubes mit der mittleren Spannbacke im Eingriff steht, auf dem Weg des Schnellhubes aber aus dieser Spannbacke ausgehängt ist, und daß der Betätigungskolben die Enden der kreisbogenförmigen Spannbacken mit je einem Ausleger übergreift, an dem sich ein Vorsprung befindet, der in eine zur Spannachse geneigte Schrägnut greift, deren Länge gleich der Wegsumme von Spann- und Schnellhub ist, wobei die Neigung der Schrägnut im gleichen Sinn wie die der Spannfläche gewählt ist.

Im Ergebnis vollführen die kreisbogenförmigen Spannbacken die Schließbewegung des Spannhubs über die Spannflächen, die Öffnungsbewegung des Spannhubs aber und sowohl die Schließ- als auch die Öffnungsbewegung des Schnellhubes über die in die Schrägnuten eingreifenden Vorsprünge. Mit Hilfe des Schnellhubs können die kreisförmigen Spannbacken soweit zurückverstellt werden, daß das Werkstück von der Seite her zwischen den beiden Spannbacken hindurch in das Spannfutter eingelegt bzw. ihm wieder entnommen werden kann. Die mittlere und während des Schnellhubs vom Spannkeilkörper abgehängte Spannbacke kann eine Verstellbegrenzung aufweisen, die Verstellungen der ausgehängten Spannbacke soweit begrenzt, daß beim anschließenden Spannhub die Einkupplung zwischen Spannbacke und Spannkeilkörper zwanglos erfolgt. Dazu kann es sich empfehlen, daß die Keilzähne an ihrem in die Treibnuten voran einlaufenden Ende mit Einlaufschrägen versehen sind.

Im übrigen wird man die Anordnung so treffen, daß die Neigung der Schrägnut auf dem dem Spannhub entsprechenden Weg geringer als auf dem dem Schnellhub entsprechenden Weg ist. Auch ist dafür zu sorgen, daß erforderlichenfalls der Spannkeilkörper Freisparungen aufweist, welche die Enden der kreisförmigen Spannbacken aufnehmen, wenn diese Spannbacken am Ende des Schnellhubs in der voll geöffneten Stellung stehen. Der Spannkeilkörper kann dann die Verstellung der kreisbogenförmigen Spannbacken in die vollständig geöffnete Stellung nicht behindern.

Die Anordnung aller drei Spannbacken in im wesentlichen derselben Ebene ist weiter mit dem Vorteil verbunden, daß hinter dieser Ebene Raum für weitere Verstelleinrichtungen, wie für Richtbacken usw., zur Verfügung steht. Insbesondere ist es vorteilhaft, daß bei am Spannkopf zum Unwuchtausgleich verschiebbar geführten Gegengewichten Verstelleinrichtungen und Feststelleinrichtungen für die Gegengewichte axial hinter der Führungsebene für die Spannbacken angordnet sein können. Vorzugsweise sind die Verstelleinrichtungen für den an der Futterbasis geführten Spannkopf in derselben Ebene wie die Ver- und Feststelleinrichtungen für die Gegengewichte angeordnet, wobei die Verstelleinrichtungen für die Gegengewichte einerseits und den Spannkopf andererseits einander diametral gegenüber und in der Mittelebene am Spannkopf angeordnet sind. Daher können der Exzenterhub zwischen der Spannachse und der Drehachse einerseits und die Gegengewichte andererseits unabhängig voneinander eingestellt werden, was den Ausgleich unterschiedlicher Werkstückgewichte bei gleicher Exzentrizität ermöglicht.

Im folgenden wird die Erfindung an einem in der Zeichnung dargestellten Ausführungsbeispiel näher erläutert; es zeigen:

Fig. 1 einen Axialschnitt durch ein Backenspannfutter nach der Erfindung,

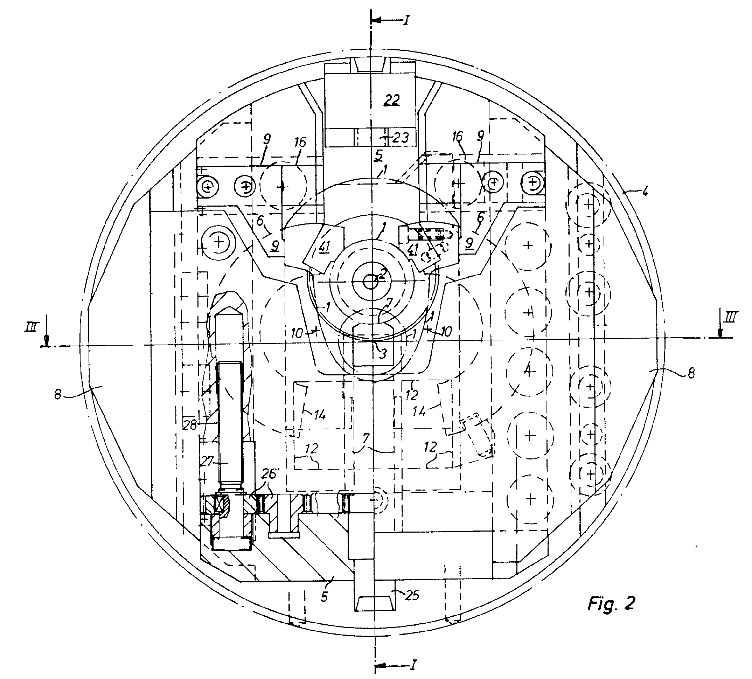

Fig. 2 eine Ansicht des Spannfutters nach Fig. 1 von vorn bei entferntem Futterdeckel und teilweise im Schnitt,

Fig. 3 den Schnitt III - III in Fig. 2,

Fig. 4.1 bis 4.3 eine Einzeldarstellung der für die Erfindung wesentlichsten Teile, nämlich der Spannacken und des Betätigungskolbens mit dem Spannkeilkörper in der Schließstellung der Spannbacken, und zwar in Fig. 4.1 in einer Axialansicht, in Fig. 4.2 den Schnitt IV.2 -IV.2 in Fig. 4.1 und in Fig. 4.3 den Schnitt IV.3 IV.3 in Fig. 4.1,

Fig. 5.1 bis 5.3 den Gegenstand der Fig. 4.1 bis 4.3 in der Offenstellung der Spannbacken,

Fig. 6 den Schnitt VI - VI in Fig. 4.1 und

Fig. 7 eine Einzeldarstellung des Betätigungskolbens mit dem Spannkeilkörper in einer Schrägansicht.

Das Backenspannfutter dient zum exzentrischen Spannen von Kurbelwellen, deren axial gesehener Umriß bei 1 angedeutet ist. Bei diesen Werkstücken verläuft die Spannachse 2 parallel und exzentrisch zur Drehachse 3 des Spannfutters. Das Spannfutter selbst besteht seinem grundsätzlichen Aufbau nach aus einer koaxial zur Drehachse 3 auf einer nicht dargestellten Drehmaschinenspindel besfestigbaren Futterbasis 4, einem an der Futterbasis parallel zu der durch die Drehachse 3 und die Spannachse 2 gehenden Mittelebene verschiebbar gehaltenen und die Einstellung der Exzentrizität der Spannachse 2 gegenüber der Drehachse 3 ermöglichenden Spannkopf 5 mit Spannbacken 6, 7, ferner mit die Unwucht des Spannkopfes 5 ausgleichenden Gegengewichten 8, die am Spannkopf 5 in gleicher Verstellrichtung wie dieser geführt sind, und aus Richtbacken 9, mit welchen eine Vorausrichtung des Werkstücks 1 vor seiner Spannung zwischen den Spannbacken 6, 7 möglich ist. Die Spannbacken,6, 7 sind im Spannkopf 5 geführt, und zwar handelt es sich zunächst um zwei spiegelsymmetrisch zur Mittelebene angeordnete, kreisbogenförmig um zur Spannachse 2 parallele Krümmungsachsen 10 gebogene und durch Schwenken um ihre Krümmungsachse 10 gegen die Spannachse 2 verstellbare Spannbacken 6, sowie um eine im Spannhub zentrisch mit den beiden kreisbogenförmigen

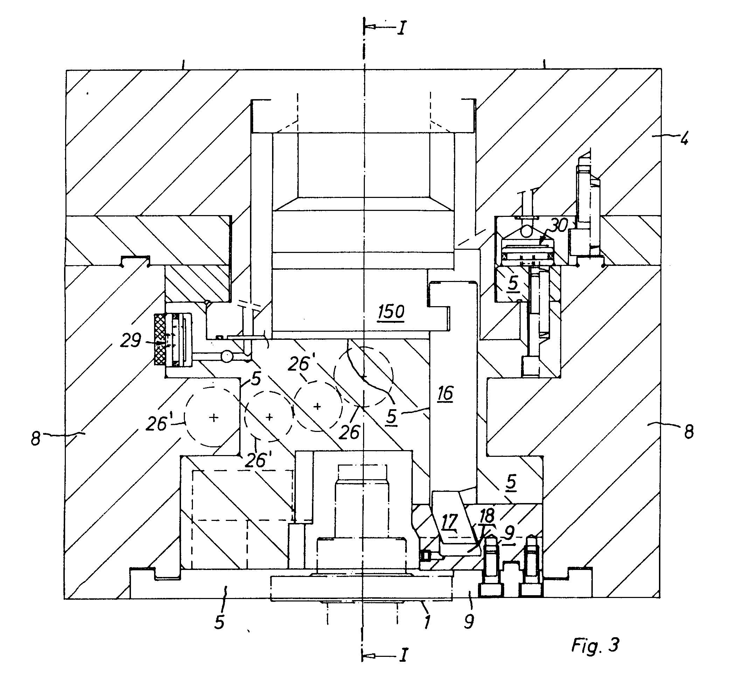

Spannbacke 6 angetriebene mittlere Spannbacke 7, die gegenüber den Spannköpfen 41 der Spannbacken 6 in der Mittelebene und in Bezug auf die Spannachse 2 radial verstellbar geführt ist. Zur Betätigung aller drei Spannbacken 6, 7 ist in der Futterbasis 4 axial verstellbar ein Treibglied 11 angeordnet, an das ein im Spannkopf 4 axial geführter Betätigungskolben 12 angeschlossen ist, der einen Spannkeilkörper 13 aufweist, dem die Spannbacken 6, 7 über jeweils eigene, schräg zur Spannachse 2 geneigt verlaufende Spannflächen 14, 15 anliegen. In das Treibglied 11 für die Spannbacken 6, 7 liegt eingeschachtelt in der Futterbasis 4 ein Betätigungsglied 150 für die Richtbacken 9, an dem in gleicher Richtung wie der Spannkopf 5 verschiebbare Betätigungsbolzen 16 eingehängt sind, die im Spannkopf 5 axial geführt und an ihrem vorderen Ende mit einem Keilkopf 17 ausgebildet sind, welche in entsprechende Keilaufnahmen 18 der Richtbacken 9 greifen. Eingeschachtelt in das Betätigungsglied 150 für die , Richtbacken 9 wiederum liegt ein Betätigungsglied 19 für eine in der Spannachse 2 liegende Spitze 20, wobei die Spitze 20 ebenfalls verschiebbar am Betätigungsglied 19 eingehängt ist. Im Ergebnis kann der Anschluß der Spitze 20 bzw. der Richtbacken 9 an ihren jeweiligen Betätigungsgliedern 150, 19 das Verschieben des Spannkopfes 5 an der Futterbasis 4 nicht behindern. Entsprechend verschiebbar über eine T-Nutverbindung 21 ist am Treibglied 11 für die Spannbacken 6, 7 der Betätigungskolben 12 eingehängt, so daß sich der Betätigungskolben 12 zusammen mit dem Spannkopf 5 gegenüber der Futterbasis 4 und dem Treibglied 11 verschieben kann, wenn die über ein Joch 22 an der Futterbasis 4 gelagerte Verstellspindel 23 gedreht wird, die in eine mit Muttergewinde versehene Büchse 24 des Spannkopfes 5 greift. - Für die Verstellung der Gegengewichte 8 ist im Spannkopf 5 diametral gegenüber der Verstellspindel 23 ein von außen drehbarer Schaft 25 mit einem Zahnrad 26 gelagert; das über zwischengeschaltete weitere Zahnräder 26′ mit einer ebenfalls im Spannkopf 5 gelagerten Spindel 27 kämmt, die in den Gegengewichten 8 in einem Muttergewinde 28 eingreift. Werden im Ergebnis die Verstellspindel 23 und der Zahnradschaft 25 gedreht, verstellen sich entsprechend der Spannkopf 5 bzw. die Gegengewichte 8 parallel zueinander. - Für die Feststellung der Gegengewichte 8 am Spannkopf 5 bzw. des Spannkopfs 5 an der Futterbasis 4 dienen hydraulische oder pneumatische Klemmeinrichtungen, von welchen in Fig. 3 lediglich eine zwischen dem Gegengewicht 8 und dem Spannkopf 5 bei 29 und eine zwischen der Futterbasis 4 und dem Spannkopf bei 30 gezeigt ist.

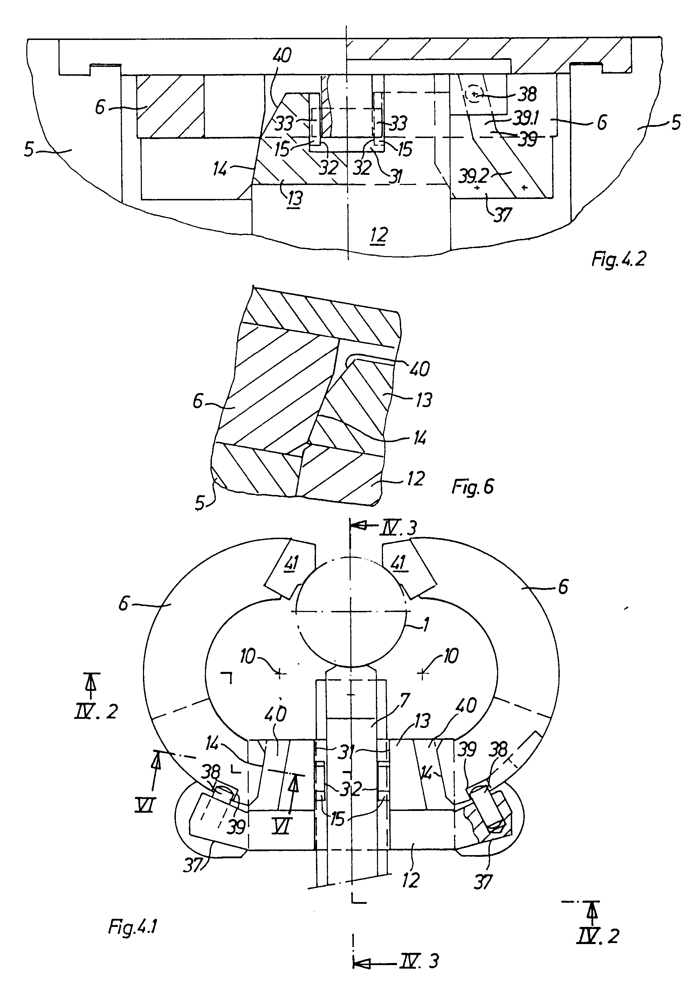

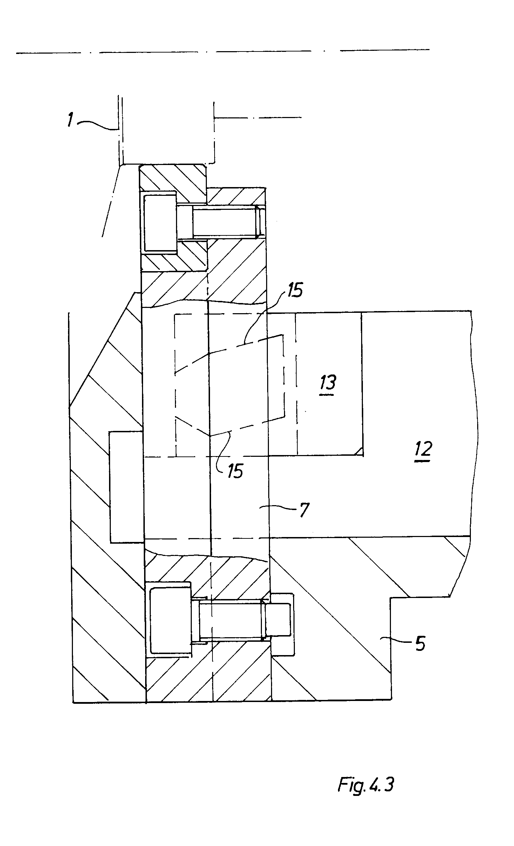

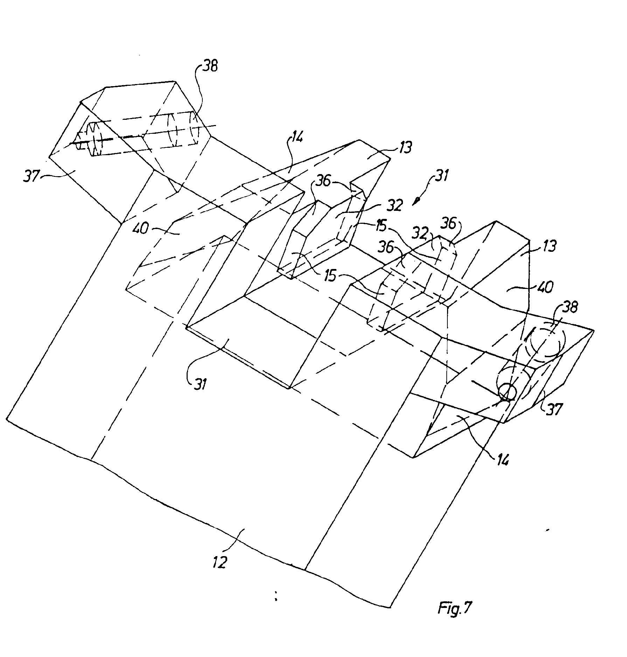

Aus den Fig. 4 bis 7 ist ersichtlich, daß der Spannkeilkörper 13 zwei seitliche Spannflächen 14 für die ihnen mit entsprechenden Schrägflächen 14′ anliegenden Enden der kreisbogenförmigen Spannbacken 6 und mittig dazwischen eine nutartige Aussparung 31 aufweist, in der die mittlere Spannbacke 7 verläuft. An den Seitenwänden dieser nutartigen Aussparung 31 befinden sich Keilzähne 32, die in Treibnuten 33 an den Seiten der mittleren Spannbacke 7 greifen und die dieser Spannbacke 7 zugeordnete Spannflächen 15 tragen, welchen die Spannbacke 7 mit den entsprechend schrägen Seitenwänden 15′ der Treibnuten 33 anliegt. Über die Neigung der Spannflächen 14, 15 und der ihnen anliegenden Schrägflächen 14′, 15′ kann der Weg aller Spannbacken 6, 7 beim Spannhub genau zueinander eingestellt und aufeinander abgestimmt werden, so daß sich eine auf die Spannachse 2 bezogene zentrische Spannbewegung aller drei Spannbacken 6, 7 ergibt.

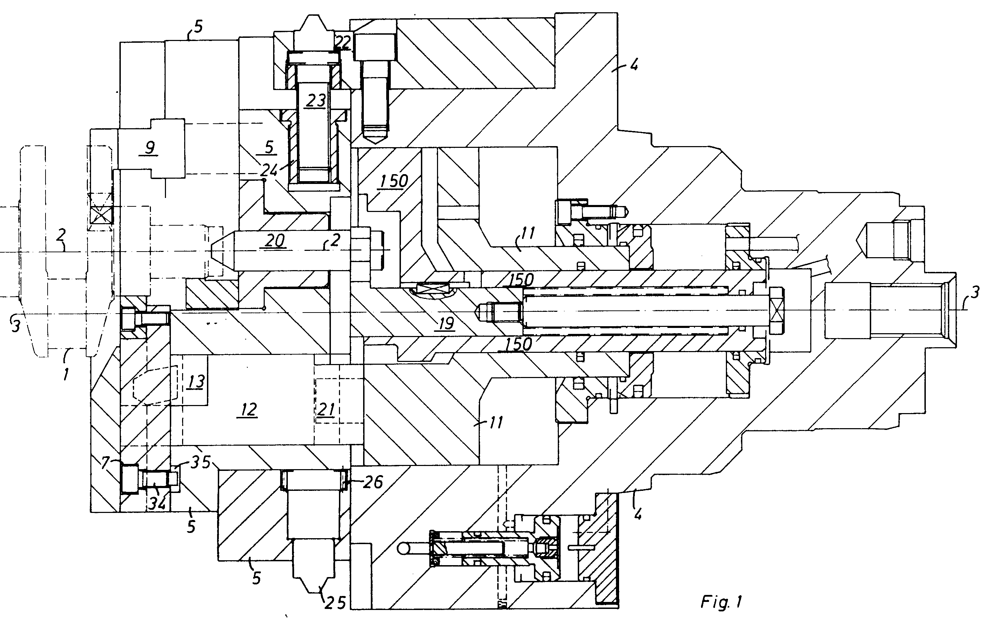

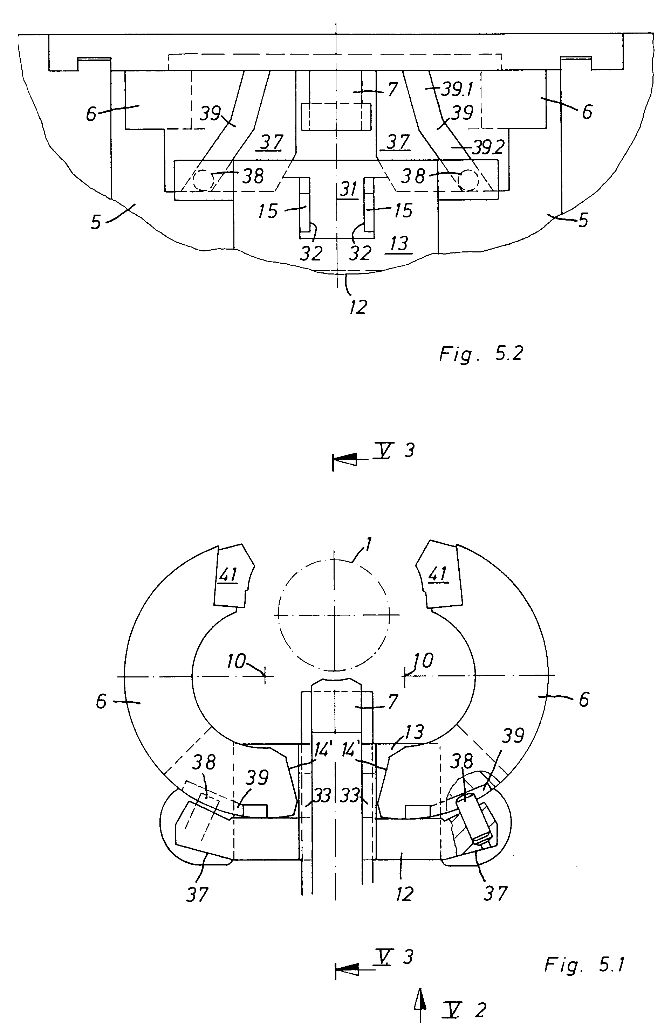

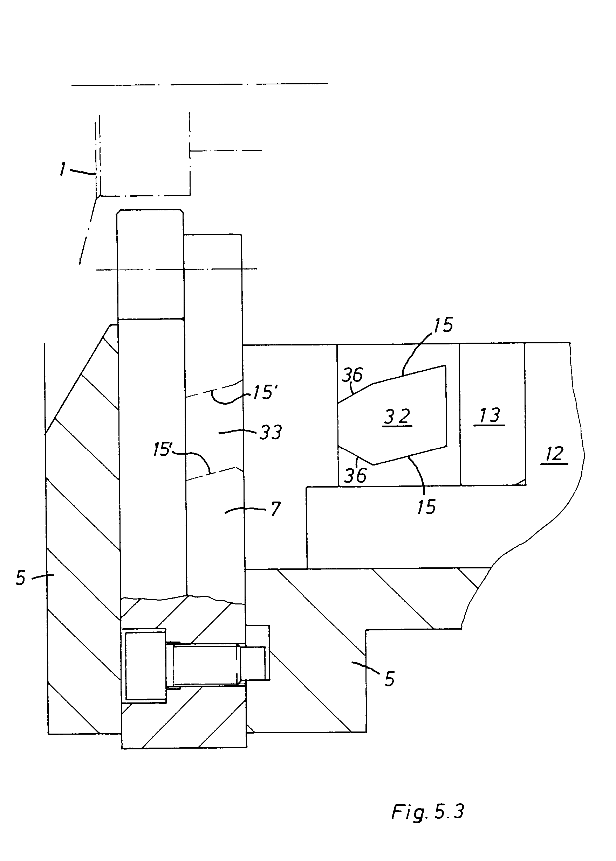

Der Betätigungskolben 12 kann anschließend an den Spannhub aller Spannbacken 6, 7 einen Schnellhub nur für die beiden kreisbögenförmigen Spannbacken 6 ausführen, um diese kreisbogenförmigen Spannbacken vollständig für die Werkstüdeaufnahme zu öffnen, so daß das Werkstüde von der Seite zwischen den geöffneten kreisbogenförmigen Spannbacken 6 hindurch in das Spannfutter eingelegt werden kann. Mit der mittleren Spannbacke 7 steht der Spannkeilkörper 13 nur auf dem Weg des Spannhubes im Eingriff, auf dem Weg des Schnellhubes aber ist er aus dieser Spannbacke 7 ausgehängt, wie der Vergleich der Fig. 4.3 und 5.3 unmittelbar erkennen läßt. Um bei diesem ausgehängten Zustand zu verhindern, daß die mittlere Spannbacke 7 eigenständige Bewegungen ausführt, die anschließend beim Spannhub den Wiedereintritt der Keilzähne 32 in die Treibnut 33 verhindern könnte, ist die Bewegung der mittleren Spannbacke 7 begrenzt, wozu in Fig. 1 eine Anschlagschraube 34 an der mittleren Spannbacke 7 in eine im Spannkopf 5 vorgesehene Begrenzungsnut 35 eingreift. Außerdem sind die Keilzähne 32 an ihrem in die Treibnuten 33 voran einlaufenden Ende mit Einlaufschrägen 36 versehen. Der Öffnungsweg des Spannhubes und der Schließ- und Öffnungsweg des Schnellhubes erfolgen für die kreisbogenförmigen Spannbacken 6 nicht über die Spannflächen 14, vielmehr übergreift der Betätigungskolben 12 die Enden der kreisförmigen Spannbacken 6 mit je einem Ausleger 37,-an dem sich ein Vorsprung 38 in Form eines Bolzens befindet, der in eine zur Spannachse 2 geneigte Schrägnut 39 greift, deren Länge gleich der Wegsumme von Spann- und Schnellhub ist, wobei die Neigung der Schrägnut 39 im gleichen rinn wie die der Spannfläche 14 gewählt ist und auf dem dem Spannhub entsprechenden Weg 39.1 geringer als auf dem dem Schnellhub entsprechenden Weg 39.2 ist. Im Ergebnis erfolgt die Öffnungsbewegung der kreisbogenförmigen Spannbacken 6 auf dem Spannhub sowie die Öffnungs- und Schließbewegung auf dem Schnellhub allein über die in die Schrägnuten 39 eingreifenden Vorsprünge 38. Der Spannkeilkörper 13 weist Freisparungen 40 auf, welche die Enden der kreisförmigen Spannbacken 6 aufnehmen, wenn diese Spannbacken 6 am Ende des Schnellgangs in der voll geöffneten Stellung stehen. Das vollständige Öffnen der kreisbogenförmigen Spannbacken 6 wird somit nicht durch den Spannkeilkörper 13 behindert.

Die Spannbacken 6, 7 besitzen alle in axialer Richtung übereinstimmende Dicke und sind senkrecht zur Axialrichtung in im wesentlichen derselben Ebene angeordnet. Sie können daher beim Spannvorgang nicht aufschnäbeln, so daß eine reaktionsfreie zentrische Einspannung des Werkstücks 1 sicher gestellt ist.

**Patentansprüche**

1. Kraftbetätigtes Backenspannfutter für exzentrisch zu spannende Werkstücke (1), insbesondere Kurbelwellen, wobei die Spannachse (2) parallel und exzentrisch zur Drehachse (3) des Spannfutters verläuft, mit einer koaxial zur Drehachse (3) auf einer Drehmaschinenspindel befestigbaren Futterbasis (4), einem an der Futterbasis (4) parallel zu der durch die Drehachse (3) und die Spannachse (2) gehenden Mittelebene verschiebbar gehaltenen und die Einstellung der Exzentrizität der Spannachse (2) gegenüber der Drehachse (3) ermöglichenden Spannkopf (5), in dem in zur Mittelebene spiegelsymmetrischer Anordnung zwei kreisbogenförmig um zur Spannachse (2) parallele Krümmungsachsen (10) gebogene und durch Schwenken um ihre Krümmungsachse (10) gegen die Spannachse (2) verstellbare Spannbacken (6) geführt sind, zu deren Betätigung ein in der Futterbasis (4) axial verstellbar angeordnetes Treibglied (11) vorgesehen ist, und mit einem in der Mittelebene und in Bezug auf die Spannachse (2) gegenüber den Spannköpfen (41) der kreisbogenförmigen Spannbacken (6) angeordneten Gegenlager für das Werkstück, dadurch gekennzeichnet, daß das Gegenlager als eine im Spannhub zentrisch mit den beiden kreisbogenförmigen Spannbacken (6) angetriebene mittlere Spannbacke (7) ausgebildet und dazu in der Mittelebene und in Bezug auf die Spannachse (2) radial verstellbar im Spannkopf (5) geführt ist, und daß zur gemeinsamen Verstellung aller drei Spannbacken (6, 7) ein an das Treibglied (11) angeschlossener, im Spannkopf (5) axial geführter Betätigungskolben (12) mit einem Spannkeilkörper (13) vorgesehen ist, der zwei seitliche Spannflächen (14), für die ihnen mit entsprechenden Schrägflächen (14′) anliegenden Enden der kreisbogenförmigen Spannbacken (6) und mittig dazwischen eine nutartige Aussparung (31) aufweist, in der die mittlere Spannbacke (7) verläuft und an deren Nutseitenwände Keilzähne (32) vorgesehen sind, die in Treibnuten (33) an den Seiten der mittleren Spannbacke (7) greifen und die dieser Spannbacke (7) zugeordnete Spannflächen (15) tragen, welchen die Spannbacke (7) mit den entsprechend schrägen Seitenwänden (15′) der Treibnuten (33) anliegt.

2. Spannfutter nach Anspruch 1, dadurch gekennzeichnet, daß der Betätigungskolben (12) anschließend an den Spannhub aller Spannbacken (6, 7) einen Schnellhub nur für die beiden kreisbogenförmigen Spannbacken (6) zum vollständigen Öffnen der Werkstückaufnahme ausführen kann, wobei der Spannkeilkörper (13) nur auf dem Weg des Spannhubes mit der mittleren Spannbacke (7) im Eingriff steht, auf dem Weg des Schnellhubes aber aus dieser Spannbacke (7) ausgehängt ist, und daß der Betätigungskolben (12) die Enden der kreisförmigen Spannbacken (6) mit je einem Ausleger (37) übergreift, an dem sich ein Vorsprung (38) befindet, der in eine zur Spannachse (2) geneigte Schrägnut (39) greift, deren Länge gleich der Wegsumme von Spann- und Schnellhub ist, wobei die Neigung der Schrägnut (39) im gleichen Sinn wie die der Spannfläche (14) gewählt ist.

3. Spannfutter nach Anspruch 2, dadurch gekennzeichnet, daß die Neigung der Schrägnut (39) auf dem dem Spannhub entsprechenden Weg (39.1) geringer als auf dem dem Schnellhub entsprechenden Weg (39.2) ist.

4. Spannfutter nach Anspruch 2 oder 3, dadurch gekennzeichnet, daß der Spannkeilkörper (13) Freisparungen (40) aufweist, welche die Enden der kreisbogenförmigen Spannbacken (6) aufnehmen, wenn diese Spannbacken am Ende des Schnellgangs in der voll geöffneten Stellung stehen.

5. Spannfutter nach einem der Ansprüche 1 bis 4, dadurch gekennzeichnet, daß die Keilzähne (32) an ihrem in die Treibnuten (33) voran einlaufenden Ende mit Einlaufschrägen (136) versehen sind.

6. Spannfutter nach einem der Ansprüche 1 bis 5, dadurch gekennzeichnet, daß die Spannbacken (6, 7) alle in axialer Richtung übereinstimmende Dicke aufweisen und senkrecht zur Axialrichtung in im wesentlichen derselben Ebene angeordnet sind.

7. Spannfutter nach Anspruch 6, dadurch gekennzeichnet, daß bei am Spannkopf (5) zum Unwuchtausgleich verschiebbar geführten Gegengewichten (8) Verstellrichtungen (25, 26, 27, 28) und Feststelleinrichtungen (29) für die Gegengewichte (8) axial hinter der Führungsebene für die Spannbacken (6, 7) angeordnet sind.

8. Spannfutter nach Anspruch 7, dadurch gekennzeichnet, daß die Verstelleinrichtung (23, 24) für den an der Futterbasis (4) geführten Spannkopf (5) in derselben Ebene wie die Ver- und Feststelleinrichtungen für die Gegengewichte (8) angeordnet sind.

9. Spannfutter nach den Ansprüchen 7 und 8, dadurch gekennzeichnet, daß die Verstelleinrichtungen (25) bzw. (23) für die Gegengewichte (8) einerseits und den Spannkopf (5) andererseits einander diametral gegenüber und in der Mittelebene am Spannkopf (5) angeordnet sind.

# EP 0 355 256 B1

## Revendications

1. Mandrin à mâchoires actionné par une source d'énergie extérieure pour le serrage excentrique de pièces à usiner (1), en particulier de vilebrequins, l'axe de serrage (2) s'étendant parallèlement et excentriquement par rapport à l'axe de rotation (3), comprenant une base de mandrin (4) pouvant être fixée coaxialement par rapport à l'axe de rotation (3) sur un arbre de tour, une tête de serrage (5) maintenue de manière déplaçable sur la base de mandrin (4), parallèlement au plan médian passant par l'axe de rotation (3) et l'axe de serrage (2) et permettant le réglage de l'excentricité de l'axe de serrage (2) par rapport à l'axe de rotation (3), dans laquelle sont guidées, en image de miroir par rapport au plan médian, deux mâchoires de serrage (6) cintrées en arc de cercle autour d'axes de courbure (10) parallèles à l'axe de serrage (2) et déplaçables par rapport à l'axe de serrage (2) par pivotement autour de leur axe de courbure (10), pour l'actionnement desquelles est prévu un organe d'entraînement (11) disposé de manière axialement mobile dans la base de mandrin (4) et une butée pour la pièce à usiner disposée dans le plan médian et, eu égard à l'axe de serrage (2), en face des têtes de serrage (41) des mâchoires de serrage (6) conformées en arc de cercle, caractérisé par le fait que la butée est réalisée sous la forme d'une mâchoire de serrage médiane (7) qui, lors de la course de serrage, est entraînée concentriquement avec les deux mâchoires de serrage (6) en arc de cercle et qu'elle est guidée à cet effet dans le plan médian et par rapport à l'axe de serrage (2) de manière radialement mobile dans la tête de serrage (5); et que pour le déplacement en commun des trois mâchoires de serrage (6, 7), il est prévu un piston d'actionnement (12) avec un corps de coin de serrage (13), couplé avec l'organe d'entraînement (11) et guidé axialement dans la tête de serrage (5), qui comporte deux surfaces de serrage latérales (14) pour les extrémités des mâchoires de serrage (6) en arc de cercle appliquées contre lesdites surfaces de serrage latérales avec des surfaces inclinées (14′) conjuguées et, au milieu entre lesdites surfaces de serrage latérales, un évidement (31) en forme de rainure dans lequel s'étend la mâchoire de serrage (7) médiane et sur les parois latérales duquel sont prévues des dents en coin (32) qui s'engagent dans des rainures d'entraînement (33) sur les côtés de la mâchoire de serrage (7) médiane et portent des surfaces de serrage (15) associées à cette mâchoire de serrage (7) contre lesquelles ladite mâchoire de serrage (7) est appliquée avec les parois latérales (15′) des rainures d'entraînement (33) présentant une inclinaison correspondante.

2. Mandrin de serrage selon la revendication 1, caractérisé par le fait que, à la suite de la course de serrage de toutes les mâchoires de serrage (6, 7), le piston d'actionnement (12) ne peut effectuer une course rapide que pour les deux mâchoires de serrage (6) en arc de cercle en vue de l'ouverture complète de la fixation de pièce, le corps de coin de serrage (13) n'étant en prise avec la mâchoire de serrage médiane (7) que sur le parcours de la course de serrage, alors qu'il est découplé de cette mâchoire de serrage (7) sur le parcours de la course rapide, et que le piston d'actionnement (12) recouvre les extrémités des mâchoires de serrage (6) en arc de cercle avec respectivement un avant-bras (37) qui comporte une partie saillante (38) laquelle s'engage dans une rainure oblique (39) inclinée en direction de l'axe de serrage (2) et dont la longueur est égale à la somme des parcours de la course de serrage et de la course rapide, l'inclinaison de la rainure oblique (39) étant choisie dans le même sens que celle de la surface de serrage (14).

3. Mandrin de serrage selon la revendication 2, caractérisé par le fait que l'inclinaison de la rainure oblique (39) est plus faible sur le parcours (39.1) correspondant à la course de serrage que sur le parcours (39.2) correspondant à la course rapide.

4. Mandrin de serrage selon l'une des revendications 2 ou 3, caractérisé par le fait que le corps de coin de serrage (13) présente des évidements (40) qui reçoivent les extrémités des mâchoires de serrage (6) en arc de cercle lorsque ces mâchoires de serrage se trouvent, à la fin de la course rapide, dans la position d'ouverture complète.

5. Mandrin de serrage selon l'une des revendications 1 à 4, caractérisé par le fait que les dents en coin (32) sont munies à leur extrémité s'engageant en premier dans les rainures d'entraînement (33), de chanfreins d'entrée (136).

6. Mandrin de serrage selon l'une des revendications 1 à 5, caractérisé par le fait que toutes les mâchoires de serrage (6, 7) présentent la même épaisseur dans la direction axiale et qu'elles sont disposées sensiblement dans le même plan perpendiculairement à la direction axiale.

7. Mandrin de serrage selon la revendication 6, caractérisé par le fait que, pour des contrepoids (8) guidés de manière déplaçable sur la tête de serrage (5) pour la compensation de balourd, des dispositifs de réglage (25, 26, 27, 28) et des dispositifs de blocage (29) pour les contrepoids (8) sont disposés axialement derrière le plan de guidage pour les mâchoires de serrage (6, 7).

8. Mandrin de serrage selon la revendication 7, caractérisé par le fait que le dispositif de réglage (23, 24) pour la tête de serrage (5) guidée sur la base de mandrin (4) est disposé dans le même plan que les dispositifs de réglage et de blocage pour les contrepoids (8).

9. Mandrin de serrage selon les revendications 7 et 8, caractérisé par le fait que les dispositifs de réglage (25) et respectivement (23) pour les contrepoids (8) d'une part et la tête de serrage (5) d'autre part sont disposés diamétralement en face les uns des autres et dans le plan -médian sur la tête de serrage (5).

## Claims

1. A power-operated jaw chuck for workpieces (1) which are to be clamped eccentrically, in particular crankshafts, wherein the clamping axis (2) extends parallel and eccentrically with respect to the axis of rotation (3) of the chuck, comprising a chuck base (4) which can be fixed on a lathe spindle coaxially with respect to the axis of rotation (3), a clamping head (5) which is held displaceably to the chuck base (4) parallel to the central plane passing through the axis of rotation (3) and the clamping axis (2) and which permits adjustment of the eccentricity of the clamping axis (2) with respect to the axis of rotation (3) and in which two clamping jaws (6) are guided, in an arrangement which is in mirror image symmetry with respect to the central plane, the clamping jaws being curved in an arcuate configuration about axes of curvature (10) which are parallel to the clamping axis (2) and being displaceable by pivotal movement about their axis of curvature (10) relative to the clamping axis (2), a drive member (11) which is axially displaceably arranged in the chuck base (4) being provided for actuation of the clamping jaws, and comprising a support means for the workpiece, which is arranged in the central plane and opposite the clamping heads (41) of the arcuate clamping jaws (6) relative to the clamping axis (2), characterised in that the support means is in the form of a central clamping jaw (7) which is driven in the clamping stroke movement centrally with the two arcuate clamping jaws (6), and for that purpose is guided in the clamping head (5) in the central plane displaceably radially with respect to the clamping axis (2), and that for joint displacement of all three clamping jaws (6, 7) there is provided an actuating piston (12) which is connected to the drive member (11) and which is axially guided in the clamping head (5), with a clamping wedge member (13), which has two lateral clamping surfaces (14) for the ends of the arcuate clamping jaws (6), which bear against them with corresponding inclined surfaces (14′), and centrally therebetween a groove-like opening (31) in which the central clamping jaw (7) moves and on the side walls of which are provided splines (32) which engage into drive grooves (33) at the sides of the central clamping jaw (7) and cry clamping surfaces (15) which are associated with said clamping jaw (7) and against which the clamping jaw (7) bears with the correspondingly inclined side walls (15′) of the drive grooves (33).

2. A chuck according to claim 1 characterised in that, following the clamping stroke movement of all clamping jaws (6, 7), the actuating piston (12) can perform a high-speed stroke movement only for the two arcuate clamping jaws (6) for complete opening of the workpiece receiving means, wherein the clamping wedge member (13) is in engagement with the central clamping jaw (7) only in the path of the clamping stroke movement but is disengaged from said clamping jaw (7) in the path of the high-speed stroke movement, and that the actuating piston (12) engages over the ends of the arcuate clamping jaws (6) with respective arms (37) on each of which there is a projection (38) engaging into an inclined groove (39) which is inclined with respect to the clamping axis (2) and the length of which is equal to the sum of the distance of the clamping and high-speed stroke movements, the inclination of the inclined groove (39) being in the same direction as that of the clamping surface (14).

3. A chuck according to claim 2 characterised in that the inclination of the inclined groove (39) is less in the path (39.1) corresponding to the clamping stroke movement than in the path (39.2) corresponding to the high-speed stroke movement.

4. A chuck according to claim 2 or claim 3 characterised in that the clamping wedge member (13) has openings (40) which receive the ends of the arcuate clamping jaws (6) when said clamping jaws are in the fully opened position at the end of the high-speed movement.

5. A chuck according to one of claims 1 to 4 characterised in that at their end which leads into the drive grooves (33) the splines (32) are provided with inclined run-in surfaces (136).

6. A chuck according to one of claims 1 to 5 characterised in that the clamping jaws (6, 7) are all of the same thickness in the axial direction and are arranged in substantially the same plane perpendicularly to the axial direction.

7. A chuck according to claim 6 characterised in that, with counterweights (8) carried displaceably on the clamping head (5) for unbalance compensation purposes displacement means (25, 26, 27, 28) and fixing means (29) for the counterweights (8) are arranged axially behind the guide plane for the clamping jaws (6, 7).

8. A chuck according to claim 7 characterised in that the displacement means (23, 24) for the clamping head (5) which is guided on the chuck base (4) are arranged in the same plane as the displacement and fixing means for the counterweights (8).

9. A chuck according to claims 7 and 8 characterised in that the displacement means (25) and (23) for the counterweights (8) on the one hand and the clamping head (5) on the other hand are arranged in mutually diametrally opposite relationship and in the central plane on the clamping head (5).

Fig. 1

Fig. 2

EP 0 355 256 B1

Fig. 3

EP 0 355 256 B1

Fig. 4.2

Fig. 6

Fig. 4.1

Fig. 4.3

Fig. 5.2

Fig. 5.1

Fig. 5.3

Fig. 7